# EUROPÄISCHE PATENTSCHRIFT

(11) **EP 0 750 925 B1**
(45) Veröffentlichungstag und Bekanntmachung des Hinweises auf die Patenterteilung: **06.08.1997**
(21) Anmeldenummer: 95101371.3
(22) Anmeldetag: 01.02.1995
(51) Int. Cl.: A63C 5/12, B29C 44/16

(54) **Verfahren zur Herstellung eines Skis**
Method of manufacturing a ski
Methode de fabrication d'un ski

(43) Veröffentlichungstag der Anmeldung: 02.01.1997
(73) Patentinhaber: BLIZZARD Gesellschaft m.b.H., A-5730 Mittersill (AT)
(72) Erfinder: Leitner, Wolfgang Dipl.Ing., A 5730 Mittersill (AT)
(74) Vertreter: Lorenz, Eduard

(56) Entgegenhaltungen:
- EP-A- 0 608 186
- WO-A-90/14383
- DE-A- 1 809 011
- FR-A- 2 632 242
- FR-A- 2 677 918
- FR-A- 2 689 024

## Beschreibung

Die Erfindung betrifft ein Verfahren zur Herstellung eines Ski mit einer Lauffläche, einem Kern und einer Oberflächenfolie oder Oberflächenschale durch Verpressen in einer Form.

Bei dem in der Skiindustrie zur Herstellung von Alpinski unter anderem angewandten Naßlaminierverfahren wird der vorgefertigte Skikern in einer teilbaren Form mit Verstärkungsfasern aus imprägnierbaren hochfesten Werkstoffen in Form von Geweben, Gelegen, Rovings oder Matten vollständig in Form eines Torsionskastens umwickelt, oder als Sandwich beidseitig mit entsprechenden Lagen bedeckt. Nach Zugabe eines unter Temperatur und Druck aushärtenden Imprägnierharzsystems (im Regelfall ein Epoxidsystem) werden die Faserlagen durchtränkt, und das Matrixsystem ausgehärtet. Gleichzeitig werden sämtliche anderen Skibauteile wie zum Beispiel Kanten, die Lauffläche oder die Oberfläche miteindander verklebt. Damit jedoch bei diesem Verfahren eine vollständige Durchtränkung der Verstärkungsfasern erfolgen kann, muß mit einem Imprägnierharz-Überschuß gearbeitet werden. Dies führt beim Verpreßvorgang zu einem Harzaustritt aus der Form und infolge zu einem im Vergleich zu anderen Herstellungsverfahren erhöhten Skigewicht.

Aus der DE 38 03 483 C ist ein Verfahren zur Herstellung eines Ski bekannt, bei welchem eine die Oberseite und die Seitenflächen umgreifende, zusammengesetzte Schale hergestellt wird. Die Herstellung erfolgt hierbei so, daß die Schale in ebener Konfiguration in einer Unterform eingelegt und der vorgefertigte Kern auf die noch ebene Schale aufgebracht wird. In der Folge preßt der Kern die Schale nach Art eines Preßstempels in die Unterform, damit die Schale ihre endgültige Form annimmt. In der DE 380 483 sind Ausführungsformen beschrieben, bei denen zum Ausgleich von Unterschieden zwischen der Kontur des Kernes und der gewünschten Endkontur bzw. zur Ausbildung von Noppen oder Vertiefungen an der Außenseite des Ski Füllmaterialien Verwendungen finden, die beim Formprozeß in entsprechende Hohlräume zwischen Schale und Kern, bzw. zwischen Schale und Untergurt fließen können. Derartige Hohlräume ausfüllende fließfähige Materialien sind jedoch in erster Linie in Bezug auf ihr Fließverhalten frei wählbar. Sie beeinflussen grundsätzlich das Dämpfungs- bzw. Elastizitätsverhalten des gesamten Ski. Für das beschriebene Verfahren eignen sich daher nur thermoplastische, leicht fließende Kunststoffe, die als Füllstoff vorgesehen sind. Damit liegt aber wiederum beispielsweise an der Außenseite einer derartigen Schicht nur Kunststoff ohne entsprechende Armierung und damit ein geringer belastbares Material vor. Das Dämpfungsverhalten sowie das Elastizitätsverhalten der gesamten Skikonstruktion wird durch derartige Zwischenschichten nachhaltig beeinflußt.

Ein anderes Verfahren der eingangs genannten Art ist beispielsweise der US 3,635,482 A zu entnehmen. Bei dieser bekannten Herstellungsweise wird ein Skigrundkörper mit einem Filament umwickelt, worauf in der Folge eine Schale aus weichem und elastischem Polyurethan um diesen gewickelten Kern angeordnet wird. Die Schale selbst kann hierbei aus faserarmiertem Material gebildet sein, wobei jedoch eine innige Verbindung zwischen dem Material der Schale und dem Material des Kerns nur durch mechanische Verankerung an den einzelnen Bindungen des Filaments erzielt werden muß. Mit Rücksicht auf das gewünschte elastische Durchbiegungsverhalten eines Ski sind aber für die Eigenschaften des Ski bei einer derartigen Konstruktion offensichtlich in erster Linie die Eigenschaften des Kernes relevant.

Die Biegeelastizitätseigenschaften der einzelnen Lagen der Schale sind aufgrund der gewählten Konstruktion unabhängig und gesondert von den elastischen Eigenschaften des Materials des Kerns zu berücksichtigen. Bei Verwendung eines Kerns aus Kunststoffmaterial mußte dieser Kern zunächst für sich gesehen vollständig ausgehärtet werden, und der Zusammenbau eines derartigen Ski fordert eine unvertretbar große Zahl von gesonderten Einzelschritten, um insgesamt die gewünschten Festigkeits- und Elastizitätseigenschaften sicherzustellen.

Die DE 43 22 300 A1 beschreibt wiederum ein Verfahren zur Herstellung eines Ski mit einem in einer Schale integrierten Obergurt, der in einer Form mit einem entsprechend gestalteten Skikern und einem Untergurt kraftschlüssig durch einen Elastomerschaum verbunden wird. Dieses Verfahren hat den Nachteil, daß der Ober- bzw. Untergurtverbund in einer ersten Fertigungsstufe verpreßt werden muß, bevor im beschriebenen Fertigungsverfahren ein Ski hergestellt werden kann.

Die AT 398 380 B beschreibt ein Verfahren zur Herstellung eines Alpinski, bei dem auf einem Skirohling bestehend aus Gurtschichten, Kern, Laufsohle und gegebenenfalls Stahlkanten an seiner Oberfläche eine Hülle aus vorzugsweise elastomerem Kunststoff aufgeformt wird, wobei zur Beeinflussung der Biegekennlinie vor und hinter dem Schuhstandbereich aufragende über den obersten Gurt angeordnete Aufsatzteile aus einem Leichtwerkstoff angeordnet sind. Auch bei diesem Fertigungsverfahren besteht der Nachteil in der aufwendigen zweistufigen Fertigung, da in einer ersten Stufe der Skirohling mit den über dem obersten Gurt angeordneten Aufsatzteilen aus einem Leichtwerkstoff hergestellt werden muß, während dann in einem zweiten Fertigungsvorgang die Oberflächenschale in einer teilbaren Form aufgeschäumt wird.

Die vorliegende Erfindung zielt nun darauf ab, ein Verfahren zur Herstellung von Ski der eingangs genannten Art zu schaffen, bei welchem beliebige Querschnitte in einfacher Weise in einem einzigen Fertigungsschritt, das heißt ohne Vorfertigung von Verbunden mit tragenden Gurten bzw. ohne aufwendiges Positionieren von speziellen Formteilen, welche exakt den Ausnehmungen bzw. Erhebungen an der Außenseite der Schale entsprechen sollen, hergestellt werden können. Gleichzeitig soll eine besonders verschleißfeste Oberflächenbeschaffenheit ohne Nachbehandlung bzw. Polieren hergestellt werden können, welche im Bezug auf ihre Verschleißfestigkeit auf jeweils den für diese Materialeigenschaften günstigsten Materialien ausgewählt werden sollen. Insbesondere ist es hierbei wünschenswert ohne die entsprechende Nachbehandlung bzw. das Polieren eine Deckschicht herzustellen, die eine hochglänzende Außenoberfläche aufweist.

Zur Lösung der vorgenannten Aufgabe besteht das erfindungsgemäße Verfahren im wesentlichen darin, daß in einer teilbaren Form zwischen Kern und Oberflächenfolie bzw. Oberflächenschale und zwischen Kern und Lauffläche mindestens jeweils eine Verstärkungslage aus hochfesten Fasern in Form von Geweben, Gelegen, Rovings oder Matten angeordnet sind und nach Zudosierung eines expandierbaren und härtbaren Matrixharzes bzw. Matrixsystems mit dem Schalenmaterial bedeckt und der Formoberteil geschlossen wird. Dieser Formoberteil kann Erhebungen oder Vertiefungen aufweisen, in die das Oberflächenmaterial (Schalenmaterial) beim nachfolgenden Verpreßvorgang durch das expandierbare Matrixharz hineingeformt wird. Durch das Temperieren der Form im Zuge des Preßvorganges verteilt sich das Matrixsystem homogen in der Form. Durch den sich im Werkzeug aufbauenden Expansionsdruck werden die Verstärkungsfasern imprägniert und die restlichen Skibauteile mit den Lagen aus Verstärkungsfasern bzw. mit der Oberflächenschale verklebt. Bei Vorliegen einer Außenform mit Vertiefungen wird die Oberfläche bzw. das Schalenmaterial durch den Expansionsdruck des Matrixharz-Systems in die Vertiefungen hineingedrückt.

Als expandierbares Matrixharz wird vorzugsweise ein Epoxid-Schaumsystem eingesetzt, da damit im Vergleich zu den üblichen Elastomerschäumen (PUR-Hartschäume) wesentlich höhere Festigkeiten in Verbindung mit den Verstärkungsfasern erreicht werden können.

Ein entsprechendes expandierbares Epoxid-Matrixsystem wird zum Beispiel von der Firma Ciba Geigy unter der Bezeichnung "Expandierende Araldit Matrixsysteme" hergestellt.

Bei den verschiedenen Verfahren zur Herstellung eines Alpinski ist es weiterhin förderlich, wenn das horizontal zwischen Form- ober- und Unterteil eingelegte Oberflächenschalenmaterial seitlich zwischen dem Formoberteil und dem Formunterteil in einer derart gestalteten Nut geführt wird, daß es dem Schalenmaterial bzw. Schalenverbund möglich ist, sich während des Expansionsvorganges des expandierenden Matrixsystems zu bewegen und die durch die Innenfläche des Formoberteils exakt vorgegebene Kontur ohne plastische Deformation des Schalenmaterials auszuformen.

Zur Erzielung bestimmter Skieigenschaften kann auch ein Teil der Verstärkungslagen von nicht zu imprägnierenden Werkstoffen, wie zum Beispiel Epoxid-Fiberglaslaminat, Epoxid-Fiberglasprepregs, Epoxid- oder Polyesterprepregs aus unterschiedlichen Faserwerkstoffen, wie zum Beispiel Fiberglas, Carbon, Polyamidfaser, Aluminiumlegierung und Federstahl.

Aus Kostengründen ist es weiters günstig in Bereichen mit starken dreidimensionalen Gestaltungen zwischen Oberflächen und den mit dem expandierbaren Matrixsystem zu imprägnierenden Verstärkungslagen, Einlagen aus Leichtbaumaterialien, wie zum Beispiel Schaumstoffe, glasfaserverstärkte Schaumstoffe oder Leichtholzprofile vorzusehen.

Ein weiterer Vorteil dieses Verfahrens besteht darin, daß Skisteifigkeitskorrekturen durch Veränderung der Kerndickenverteilung im Vergleich zu den üblichen Schalenskiherstellverfahren leicht möglich sind. Üblicherweise ist es bei einer formmaßgebundenen Herstellweise ohne Änderung der Skidickenverteilung äußerst schwierig eine Skisteifigkeitskorrektur durchzuführen, da eine Veränderung der Kerndickenverteilung auch eine Veränderung der Formgeometrie bedingen würde. Beim vorliegenden Verfahren kann die Kerndickenverteilung innerhalb bestimmter Grenzen verändert werden, da sich durch eine Änderung der Kerndickenverteilung nur die Schichtstärke der mit expandierbarem Matrixharz ausgefüllten Lagen, nicht jedoch die Gesamtstärke des Ski verändert.

Weitere besondere Ausgestaltungen des erfindungsgemäßen Verfahrens sind in den sich an den Hauptanspruch anschließenden Unteransprüchen wiedergegeben.

Schließlich werden weitere Einzelheiten und Vorteile der Erfindung anhand von in den sich anschließenden Figuren schematisch dargestellten Ausführungsbeispielen erläutert. Es zeigen:
- Fig. 1:: Einen Querschnitt durch eine schematisierte Vorrichtung zur Durchführung einer ersten Variante des erfindungsgemäßen Verfahrens in schematisierter Darstellung,
- Fig. 2:: Einen Querschnitt durch einen Ski, der mit der Vorrichtung gemäß Figur 1 nach der ersten Variante des erfindungsgemäßen Verfahrens hergestellt wurde,
- Fig. 3:: Einen Querschnitt durch eine schematisierte Vorrichtung zur Durchführung einer zweiten Variante des erfindungsgemäßen Verfahrens in schematisierter Darstellung,
- Fig. 4:: Einen Querschnitt durch einen Ski, der mit der Vorrichtung gemäß Figur 3 nach der zweiten Variante des erfindungsgemäßen Verfahrens hergestellt wurde,
- Fig. 5:: Einen Querschnitt durch eine schematisierte Vorrichtung zur Durchführung einer dritten Variante des erfindungsgemäßen Verfahrens in schematisierter Darstellung,
- Fig. 6:: Einen Querschnitt durch einen Ski, der mit der Vorrichtung gemäß Figur 5 nach der dritten Variante des erfindungsgemäßen Verfahrens hergestellt wurde,
- Fig. 7:: Einen Querschnitt durch eine schematisierte Vorrichtung zur Durchführung einer vierten Variante des erfindungsgemäßen Verfahrens in schematischer Darstellung,
- Fig. 8:: Einen Querschnitt durch einen Ski, der mit der Vorrichtung gemäß Figur 7 nach der vierten Variante des erfindungsgemäßen Verfahrens hergestellt wurde,
- Fig. 9:: Einen Querschnitt durch eine schematisierte Vorrichtung zur Durchführung einer fünften Variante des erfindungsgemäßen Verfahrens in schematisierter Darstellung und
- Fig. 10:: Einen Querschnitt durch einen Ski, der mit der Vorrichtung gemäß Figur 9 nach der ersten Variante des erfindungsgemäßen Verfahrens hergestellt wurde.

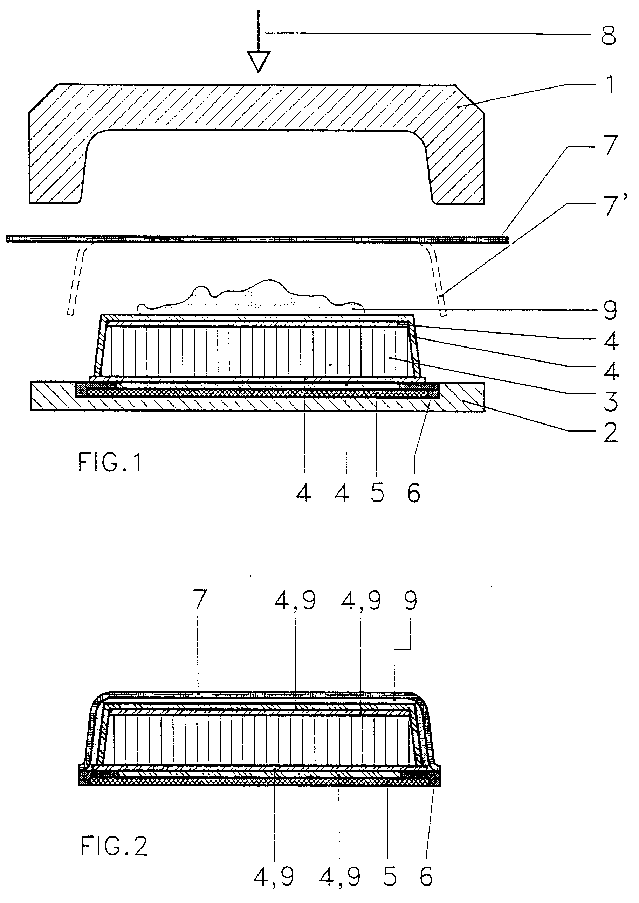

In Figur 1 ist mit 1 ein Oberteil einer Außenform bzw. Preßform bezeichnet, welche beim Zusammenwirken mit dem Unterteil 2 der Außenform bzw. Preßform zur Herstellung eines Ski eingesetzt wird. Der fertigzustellende Ski weist einen allgemein mit 3 bezeichneten Kern auf, wobei auf der zur Oberseite des Ski gewandten Fläche des Kerns eine oder mehrere allgemein mit 4 bezeichnete Lagen aus hochfesten Faserwerkstoffen in Form von Geweben, Gelegen, Rovings oder entsprechenden Matten angeordnet sind.

Der Kern 3 mit den Zwischenlagen 4 ist dabei gemäß der Darstellung in Figur 1 mitsamt einer Lauffläche 5 und Kanten 6 bereits im Unterteil 2 der Form angeordnet. Zur Fertigstellung des Ski wird eine Oberflächenfolie bzw. Oberflächenschale 7 verwendet, welche durch Absenken des Oberteils 1 der Formrichtung des Pfeiles 8 mit den in der Unterform 2 befindlichen Teilen des Ski verpreßt und verbunden wird. Nach dem Aufdosieren des expandierbaren Matrixsystems 9 werden durch das Schließen des Formoberteils 1 sowie das nachfolgende Expandieren des Matrixschaumsystems 9 die Gewebelagen 4 imprägniert und durch die Aushärtung unter Druck und Temperatur mit dem restlichen Skibauteil verklebt.

Der mittels der Vorrichtung nach Figur fertiggestellte Ski ist in Figur 2 im Schnitt dargestellt.

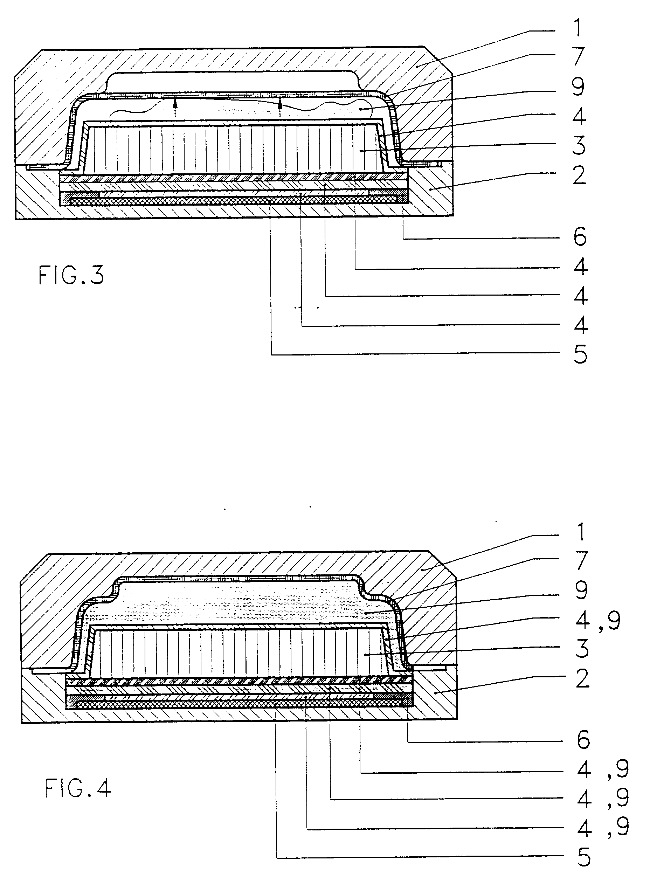

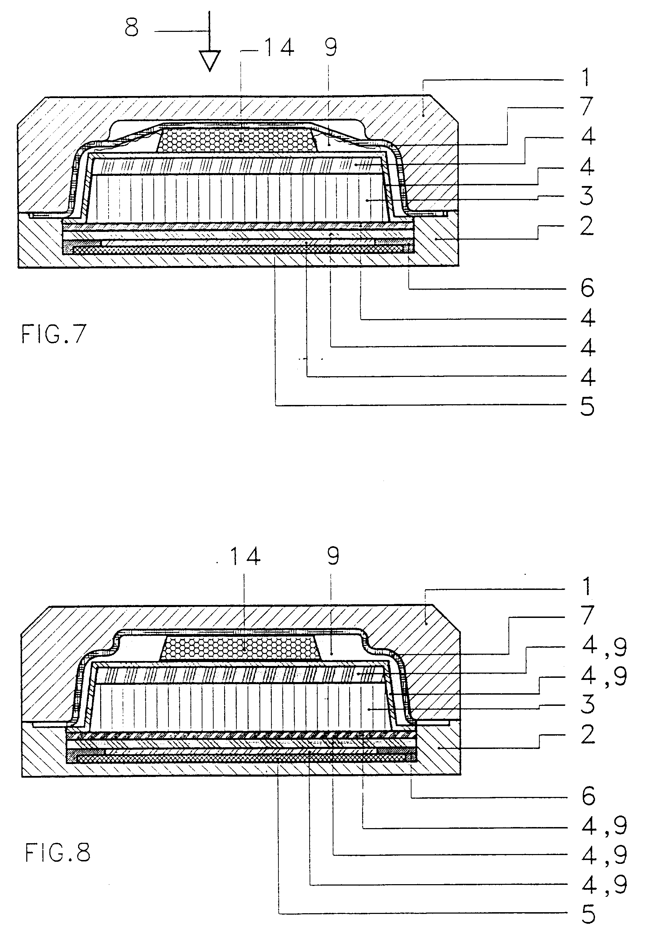

Figur 3 zeigt in einem schematischen Schnitt eine weitere Vorrichtung zur Durchführung des erfindungsgemäßen Verfahrens, bei dem das später die Skiseiten und die Oberfläche bildende Schalenmaterial 7 vorzugsweise an der Oberfläche mit einer Schutz- oder Trennfolie versehen ist, die nach dem Formen bzw. der Endbearbeitung des Ski abgezogen wird und die nach dem Schließen des Formoberteils 1 in den seitlichen Nuten zwischen Formoberteil 1 und Unterteil 2 frei beweglich ist. Der mit der Vorrichtung gemäß Figur 7 hergestellte Ski ist in Figur 4 in der Vorrichtung liegend im Schnitt dargestellt. Hier zeigt sich, daß die Oberflächenschale durch den Expansionsdruck des Matrixsystems 9 gegen die Innenkontur des Oberteils der Außenform gedrückt wird, wobei gleichzeitig das Schalenmaterial 7 seitlich im Formoberteil 1 nach innen gezogen wird. Auf diese Weise kommt es vorteilhaft zu keiner plastischen Deformation (das heißt fließenden Verformung) des Schalenmaterials, so daß das bereits im Druckverfahren ober- und unterseitig aufgebrachte Design des Schalenmaterials im Zuge der Ausformung der Endkontur von Seiten- und Oberflächen nicht verändert oder zerstört wird.

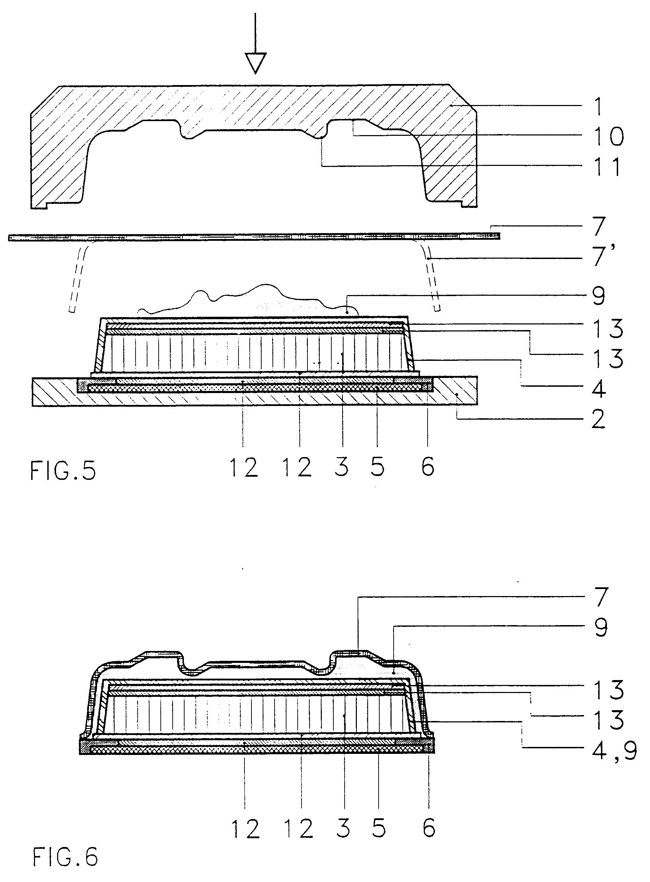

In Figur 5 ist der Zusammenbau eines Skiquerschnitts, bei dem der Oberteil 1 der Form- bzw. Außenform in gewissen Bereichen Profilierungen in Form von Erhebungen 10 bzw. Vertiefungen 11 aufweist, dargestellt. Die zwischen Kern 3 und Lauffläche 5 liegenden Verstärkungslagen 12 sowie eine oder mehrere Decklagen 13 bestehen nicht aus imprägnierbaren Faserwerkstoffen, sondern in dieser Ausführungsform aus üblichen Skibauwerkstoffen, wie zum Beispiel Epoxidfiberglas-Laminaten, Aluminiumlegierungen, Prepregs aus unterschiedlichen Verstärkungsfasern, wie Glasfaser, Carbon und Aramidfaser oder Federstahl. Lediglich die zwischen der Oberflächenschale 7 und dem Kern 3 liegende Schicht 4 besteht aus imprägnierbaren Faserwerkstoffen, so daß das zudosierte Matrix-Schaumsystem 9 in erster Linie in Verbindung der Skischale mit dem anderen Teil und der Ausformung von Profilierungen dient. Die Figur 6 zeigt den gemaß dem Verfahren nach Figur 5 hergestellten Skiquerschnitt.

Gemäß Figur 7 ist zwischen den imprägnierbaren Zwischenlagen 4 und dem Oberlächenschalenmaterial 7 eine Einlage aus einem Leichtbaumaterial 14 angeordnet. Nach dem Zudosieren des expandierenden Matrixsystems 9 und dem Schließen des Formoberteils 1 in Richtung des Pfeiles 8 wird das Leichtbaumaterial 14 allseitig vom expandierenden Matrixsystem umgeben, die Verstärkungslagen 4 werden mit dem Matrixsystem 9 getränkt und durch den nachfolgenden Härtungsvorgang mit den anderen Skibauteilen verklebt. Figur 8 zeigt den nach dem Verfahren, welches an Hand der Figur 7 erläutert wurde, hergestellten Skiquerschnitt.

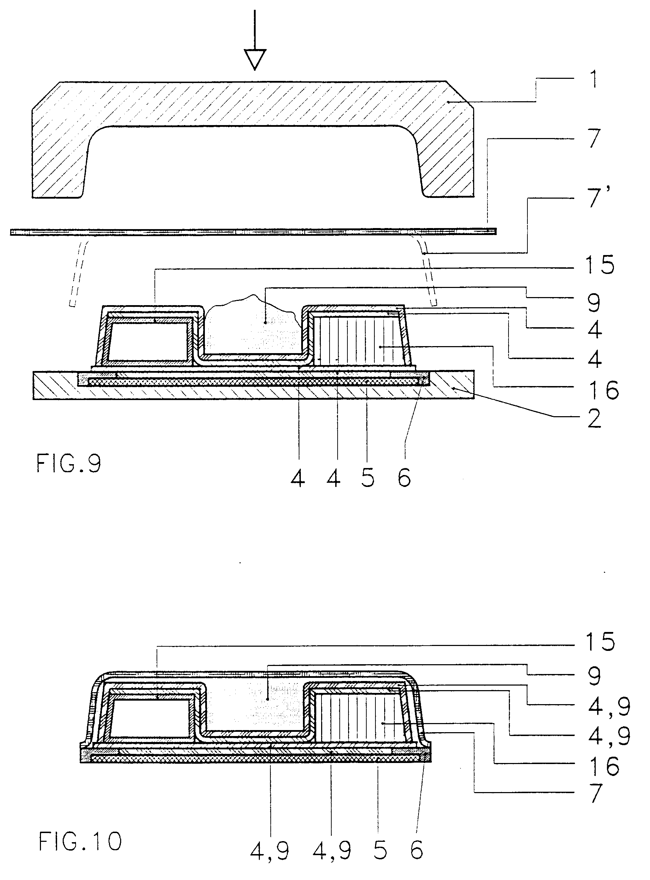

In Figur 9 weist der in einer für die Durchführung des Verfahrens geeigneten Vorrichtung zusammengebaute Ski einen geteilten Kern 15, 16 auf, der aus unterschiedlichen Kernmaterialien, wie zum Beispiel Holz, profiliertem bzw. faserverstärktem Kunststoff, Wabenkern oder Metallprofil bestehen kann, wobei zur Erzielung spezieller Skieigenschaften auch unterschiedliche Kernteile 15 und 16 kombiniert werden können. Die zu imprägnierenden Verstärkungsfaserlagen 4 sind in die dadurch entstehende Nut eingeformt. Das expandierende Matrixsystem 9 wird bevorzugt in diese Nut hineindosiert, wodurch sich wesentlich kürzere Fließwege und eine bessere Imprägnierung der zwischen den Kernen 15 und 16 und der Lauffläche 5 liegenden Verstärkungsfaserlagen 4 ergibt. In Figur 10 ist der fertiggestellte Skiquerschnitt, der mittels dem an Hand der Figur 9 erläuterten Verfahrens hergestellt wurde, dargestellt.

## Patentansprüche

1. Verfahren zur Herstellung eines Ski mit einer Lauffläche (5), einem Kern (3) und einer Oberflächenfolie oder Oberflächenschale (7), durch Verpressen in einer Form (1, 2),
**gekennzeichnet durch folgende Schritte:**
- Einlegen mindestens jeweils einer Verstärkungslage (4) aus hochfesten Fasern zwischen Kern (3) und Oberflächenfolie (7) bzw. Oberflächenschale und zwischen Kern (3) und Lauffläche (5),
- Aufdosieren eines expandierbaren, härtbaren Matrixharzes (9) unterhalb der Oberflächenfolie bzw. Oberflächenschale (7) vor dem Schließen der Form (1, 2), und
- Schließen der Form (1, 2) und Temperieren der Form (1, 2) sowie Pressen mittels der Form in dem Maße, daß sich das expandierbare, härtbare Matrixharz (9) in der Form verteilt.

2. Verfahren nach Anspruch 1, dadurch gekennzeichnet, daß die Imprägnierung der Verstärkungslagen (4) durch den Expansionsdruck des expandierbaren und härtbaren Matrixharzes (9) erfolgt.

3. Verfahren nach Anspruch 1 oder 2, dadurch gekennzeichnet, daß als härtbares und expandierbares Matrixharz (9) ein Epoxidschaumsystem verwendet wird.

4. Verfahren nach einem der Ansprüche 1 bis 3, dadurch gekennzeichnet, daß als Verstärkungslagen (4) Gewebe, Gelege, Rovings aus hochfesten Faserwerkstoffen, insbesondere Glasfasern, Carbonfasern oder Polyamidfasern eingesetzt werden.

5. Verfahren nach einem der Ansprüche 1 bis 4, dadurch gekennzeichnet, daß das Oberflächenschalenmaterial seitlich zwischen dem Formoberteil (1) und dem Formunterteil (2) in einer derart gestalteten Nut geführt wird, daß es dem Schalenmaterial möglich ist, sich während des Expansionsvorganges des Matrixharzes (9) zu bewegen und die durch die Innenfläche des vom Oberteil (1) exakt vorgegebene Kontur ohne plastische Deformation des Schalenmaterials auszuformen.

6. Verfahren nach einem der Ansprüche 1 bis 5, dadurch gekennzeichnet, daß zwischen der Oberflächenschale (7) und der benachbarten mit dem expandierbaren Matrixsystem zu imprägnierenden Verstärkungslage (4) in bestimmten Bereichen vorgeformte Füllstoffe aus Leichtwerkstoffen (14) eingelegt werden.

7. Verfahren nach einem der Ansprüche 1 bis 6, dadurch gekennzeichnet, daß die vorgefertigten Füllstoffkörper zumindest vorwiegend aus einem Leichtwerkstoff (14) mit einer Dichte von 0,1 bis 0,4 g/cm³ bestehen.

8. Verfahren nach einem der Ansprüche 1 bis 7, dadurch gekennzeichnet, daß der vorgefertigte Skikern (3) geteilt ist.

9. Verfahren nach einem der Ansprüche 1 bis 8, dadurch gekennzeichnet, daß die Verstärkungslagen (4) in den zwischen den geteilten Kernen (15, 16) liegenden Spalt in der Form einer Rinne angeordnet sind.

## Claims

1. A method for manufacturing a ski with a sliding face (5), a core (3) and a surface film or surface shell (7) by being pressed in a mould (1, 2),
characterized by the following steps:
. respectively inserting at least one reinforcing layer (4) of high-tenacity fibres between the core (3) and the surface film (7) or surface shell, and between the core (3) and the sliding face (5),
. the metered addition of an expandable, hardenable matrix resin (9) beneath the surface film or surface shell (7) before the mould (1, 2) is closed, and
. closing the mould (1, 2) and adjusting the temperature of the mould (1, 2), as well as exerting pressure by means of the mould to the extent that the expandable, hardenable matrix resin (9) is distributed in the mould.

2. A method according to claim 1, characterized in that the impregnation of the reinforcing layers (4) is effected by the expansion pressure of the expandable and hardenable matrix resin (9).

3. A method according to claim 1 or 2, characterized in that an epoxy foam system is used as the hardenable and expandable matrix resin (9).

4. A method according to one of claims 1 to 3, characterized in that textile fabrics, deposits, rovings of high-tenacity fibre materials, in particular glass fibres, carbon fibres or polyamide fibres are used as the reinforcing layers (4).

5. A method according to one of claims 1 to 4, characterized in that the surface shell material is carried laterally between the top mould part (1) and the bottom mould part (2) in a groove formed in such a way that the shell material can move during the expansion process of the matrix resin (9) and form the contour exactly predetermined by the inner surface of the upper part (1), without plastic deformation of the shell material.

6. A method according to one of claims 1 to 5, characterized in that between the surface shell (7) and the adjoining reinforcing layer (4) to be impregnated by the expandable matrix system, preshaped fillers of light materials (14) are inserted in certain zones.

7. A method according to one of claims 1 to 6, characterized in that the prefabricated bodies of the filler material consist at least in the main of a light material (14) with a density of 0.1 to 0.4 g/cm³.

8. A method according to one of claims 1 to 7, characterized in that the prefabricated ski core (3) is divided up.

9. A method according to one of claims 1 to 8, characterized in that the reinforcing layers (4) are arranged in the gap lying in the form of a channel between the divided cores (15, 16).

## Revendications

1. Procédé de fabrication d'un ski avec une surface de glissement (5), un noyau (3) et une feuille de surface ou coque de surface (7), par compression dans un moule (1, 2)
caractérisé par les étapes suivantes :
- mise en place d'au moins respectivement une couche de renforcement (4) en fibres d'une résistance élevée entre le noyau (3) et la feuille de surface (7) et, respectivement la coque de surface et entre le noyau (3) et la surface de glissement (5),
- application par dosage d'une résine matrice durcissable, apte à l'expension (9) en dessous de la feuille de surface et, respectivement de la coque de surface (7) avant la fermeture du moule (1, 2) et
- fermeture du moule (1, 2) et mise à température du moule (1, 2) ainsi que compression au moyen du moule jusqu'à ce que la résine matrice durcissable (9) apte a l'expension soit répartie dans le moule.

2. Procédé selon la revendication 1, caractérisé en ce que l'imprégnation des couches de renforcement (4) a lieu par la pression d'expansion de la résine matrice durcissable (9) apte à l'expansion.

3. Procédé selon la revendication 1 ou 2, caractérisé en ce qu'on utilise comme résine matrice durcissable et apte à l'expansion (9) un système de mousse époxy.

4. Procédé selon l'une des revendications 1 à 3, caractérisé en ce qu'on utilise comme couches de renforcement (4) des tissus, des couches, des stratifils de verre textile en des matériaux fibreux à résistance élevée, notamment des fibres de verre, des fibres de carbone ou des fibres de polyamide.

5. Procédé selon l'une des revendications 1 à 4, caractérisé en ce que le matériau de la coque de surface est guidé latéralement entre la partie supérieure (1) du moule et la partie inférieure (2) du moule dans une rainure réalisée de façon que le matériau de coque peut se déplacer pendant l'opération d'expansion de la résine matrice (9) et former le contour prédéterminé d'une manière exacte par la surface intérieure de la partie supérieure (1) sans déformation plastique du matériau de coque.

6. Procédé selon l'une des revendications 1 à 5, caractérisé en ce que sont placées entre la coque de surface (7) et la couche de renforcement avoisinante (4) destinée à être imprégnée avec le système matrice expansible, dans certaines zones, des matières de remplissage préformées en matériaux légers (14).

7. Procédé selon l'une des revendications 1 à 6, caractérisé en ce que les corps de remplissage préfabriqués sont constitués au moins majoritairement d'un matériau léger (14) d'une densité de 0,1 à 0,4 g/cm³.

8. Procédé selon l'une des revendications 1 à 7, caractérisé en ce que le noyau de ski préfabriqué (3) est divisé.

9. Procédé selon l'une des revendications 1 à 8, caractérisé en ce que les couches de renforcement (4) sont disposées dans la fente sous forme de rainure se trouvant entre les noyaux divisés (15, 16).
